(19) Europäisches Patentamt
European Patent Office
Office européen des brevets

(11) **EP 4 711 810 A1**

(12) **EUROPEAN PATENT APPLICATION**

(43) Date of publication:
**18.03.2026 Bulletin 2026/12**

(21) Application number: **25200203.5**

(22) Date of filing: **04.09.2025**

(51) International Patent Classification (IPC):
**G01S 7/497** (2006.01)    **G01S 7/481** (2006.01)
**G01S 7/4913** (2020.01)    **G01S 7/4915** (2020.01)
**G01S 7/4912** (2020.01)    **G01S 17/34** (2020.01)
**G01S 17/42** (2006.01)    **G01S 17/58** (2006.01)
**G01S 17/931** (2020.01)

(52) Cooperative Patent Classification (CPC):
**G01S 7/4815; G01S 7/4816; G01S 7/4913;
G01S 7/4915; G01S 7/4917; G01S 7/497;
G01S 17/34; G01S 17/42; G01S 17/58;
G01S 17/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.09.2024 KR 20240125051**

(71) Applicant: **Samsung Electronics Co., Ltd.
Suwon-si, Gyeonggi-do 16677 (KR)**

(72) Inventors:
• **KO, Byunghoon**
  **16678 Suwon-si (KR)**
• **PARK, Sangyun**
  **16678 Suwon-si (KR)**
• **LEE, Jisan**
  **16678 Suwon-si (KR)**
• **NOH, Seungwoo**
  **16678 Suwon-si (KR)**
• **YOU, Jangwoo**
  **16678 Suwon-si (KR)**
• **CHOI, Jinwoo**
  **16678 Suwon-si (KR)**
• **HWANG, Inoh**
  **16678 Suwon-si (KR)**

(74) Representative: **Arnold & Siedsma
Bezuidenhoutseweg 57
2594 AC The Hague (NL)**

(54) **LIDAR SYSTEM USING MULTIPLE WAVELENGTHS AND OPERATING METHOD THEREOF**

(57)    Provided is a light detection and ranging (Li-DAR) system including a signal generator configured to generate a plurality of pieces of light having different wavelengths, a transceiver including a transmitter configured to output the plurality of pieces of light as a transmit signal, and a receiver configured to generate a target signal by mixing a first local oscillator signal with a receive signal incident after the transmit signal is reflected from a target, and generate a reference signal by mixing a second local oscillator signal with a light delay signal generated through a reference arm, and a circuit operably connected to the signal generator and the transceiver, the circuit being configured to control an operation of the signal generator and an operation of the transceiver, wherein the receiver includes a superposer configured to generate a superposed signal by superposing the target signal and the reference signal.

FIG. 4

## Description

BACKGROUND

1. Field

The disclosure relates to a light detection and ranging (LiDAR) system and an operating method thereof.

2. Description of Related Art

In general frequency modulated continuous wave (FMCW) light detection and ranging (LiDAR), a frequency-modulated signal in the form of a triangular wave is transmitted and received in terms of frequency with respect to time.

An important factor in determining the measurement accuracy of an FMCW LiDAR system is to generate a transmit signal that linearly increases or decreases in frequency. When the transmit signal increases nonlinearly, a signal incident after the transmit signal is reflected from a target (hereinafter referred to as a "receive signal") is returned nonlinearly. In this case, a frequency of an interference signal between the transmit signal and the receive signal (hereinafter referred to as a "beat frequency") may not be constant and may fluctuate in response to the frequency difference between the two signals. That is, as the nonlinearity of the transmit signal increases, the spectral peak sharpness of the beat frequency decreases, which may deteriorate the signal-to-noise ratio (SNR) of the FMCW LiDAR system.

Recently, research has been conducted to ensure the linearity of transmit signals. For example, a method is utilized which generates a reference signal through a reference arm with an optical delay of a known length and improves a signal-to-noise ratio (SNR) of a LiDAR system by using the reference signal.

However, when applying the above-mentioned technology to a high-resolution LiDAR system including a multi-wavelength light source, the complexity of the system increases so as to ensure the linearity of the transmit signal, which reduces the efficiency of the system and makes it difficult to apply to an actual system due to increased cost and increased computational amount.

Accordingly, improving an SNR of a high-resolution LiDAR system without increasing the complexity of the system is needed.

SUMMARY

One or more embodiments provide a light detection and ranging (LiDAR) system and an operating method thereof.

Additional aspects will be set forth in part in the description which follows and, in part, will be apparent from the description, or may be learned by practice of the presented embodiments of the disclosure.

According to an aspect of one or more embodiments, there is provided a LiDAR system including a signal generator configured to generate a plurality of pieces of light having different wavelengths, a transceiver including a transmitter configured to output the plurality of pieces of light as a transmit signal, and a receiver configured to generate a target signal by mixing a first local oscillator signal with a receive signal incident after the transmit signal is reflected from a target, and generate a reference signal by mixing a second local oscillator signal with a light delay signal generated through a reference arm, and a circuit operably connected to the signal generator and the transceiver, the circuit being configured to control an operation of the signal generator and an operation of the transceiver, wherein the receiver includes a superposer configured to generate a superposed signal by superposing the target signal and the reference signal.

Preferably, the signal generator includes a light source configured to generate the plurality of pieces of light having the different wavelengths, a multiplexer configured to simultaneously receive and multiplex the plurality of pieces of light, and a light modulator configured to modulate the plurality of pieces of light.

Preferably, the circuit includes a processor configured to correct the target signal based on the reference signal, frequency-modulate the reference signal based on a carrier frequency, and generate the superposed signal by superposing the frequency-modulated reference signal and the target signal.

Preferably, the at least one processor is further configured to extract the frequency-modulated reference signal by band-pass-filtering the superposed signal, and extract the reference signal by demodulating and low-pass-filtering the frequency-modulated reference signal.

Preferably, the processor is further configured to generate a reference clock signal based on the extracted reference signal.

Preferably, the processor is further configured to remove distortion of the target signal to generate the corrected target signal based on the reference clock signal.

Preferably, the processor is further configured to obtain at least one of a distance of the target and a velocity of the target, based on the corrected target signal.

Preferably, the transceiver includes a focal plane array including pixel groups in a matrix form, and each of the pixel groups includes at least two pixels, and the transmitter is further configured to output the transmit signal in units of pixel groups including at least two pixels.

Preferably, the focal plane array is configured to receive the transmit signal through a main bus waveguide.

Preferably, each pixel of the at least two pixels includes a first optical coupler configured to split an input signal into the transmit signal, the reference signal, the first local oscillator signal, and the second local oscillator signal, a light antenna configured to emit the transmit signal into free space and/or receive the receive signal from the free space, a second optical coupler configured to generate a first output light signal by mixing the first local oscillator signal with the receive signal, a third optical coupler configured to generate a second output light signal by mixing the second local oscillator signal with the reference signal, a first photoelectric converter configured to convert the first output light signal into the target signal, and a second photoelectric converter configured to convert the second output light signal into the reference signal.

Preferably, each pixel of the at least two pixels further includes a reference arm provided between the first optical coupler and the second optical coupler, and the reference arm is configured to generate the second output light signal.

Preferably, he input signal includes a frequency modulated continuous wave (FMCW) laser signal.

Preferably, the first photoelectric converter includes a first balanced photodiode configured to convert the first output light signal into an electrical signal and a first transimpedance amplifier configured to amplify intensity of the electrical signal, and the second photoelectric converter includes a second balanced photodiode configured to convert the second output light signal into an electrical signal and a second transimpedance amplifier configured to amplify intensity of the electrical signal.

Preferably, the circuit includes an analog-to-digital converter configured to binarize the electrical signal, and the superposed signal is received through a single channel of the analog-to-digital converter.

According to another aspect of one or more embodiments, there is provided an operating method of a LiDAR system, the operating method including generating, by a signal generator, a plurality of pieces of light having different wavelengths, outputting, by a transceiver, the plurality of pieces of light as a transmit signal, generating a target signal by mixing a first local oscillator signal with a receive signal incident after the transmit signal is reflected from a target, generating a reference signal by mixing a second local oscillator signal with a light delay signal generated through a reference arm, receiving, by a processor, through a signal channel, a superposed signal generated by superposing the target signal and the reference signal, and correcting, by the a processor, the target signal based on the reference signal.

Preferably, the correcting of the target signal includes frequency-modulating the reference signal based on a carrier frequency, and generating the superposed signal by superposing the frequency-modulated reference signal and the target signal.

Preferably, the correcting of the target signal includes extracting the frequency-modulated reference signal by band-pass-filtering the superposed signal, and extracting the reference signal by demodulating and low-pass-filtering the frequency-modulated reference signal.

Preferably, the correcting of the target signal includes generating a reference clock signal based on the extracted reference signal.

Preferably, the correcting of the target signal includes generating the corrected target signal based on the reference clock signal to remove distortion of the target signal.

Preferably, the operating method further includes obtaining at least one or a distance of the target and a velocity of the target, based on the corrected target signal.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1A illustrates a transmit signal transmitted from an FMCW LiDAR system and having a linearly increasing frequency, a receive signal incident after the transmit signal is reflected from a target, and a beat frequency;

FIG. 1B illustrates a transmit signal and a receive signal when the frequency of the transmit signal increases nonlinearly;

FIG. 1C is a graph showing the spectral peak sharpness of the beat frequency of FIG. 1B;

FIG. 2 is a conceptual diagram illustrating a LiDAR system according to one or more embodiments;

FIG. 3A is a block diagram illustrating a light source applicable to a signal generator, according to one or more embodiments;

FIG. 3B is a block diagram illustrating a light source applicable to a signal generator, according to one or more other embodiments;

FIG. 3C is a block diagram illustrating a light source applicable to a signal generator, according to one or more other embodiments;

FIG. 3D is a block diagram illustrating a light source applicable to a signal generator, according to one or more other embodiments;

FIG. 4 illustrates a pixel included in a focal plane array (FPA);

FIG. 5A is a graph for describing a target signal;

FIG. 5B is a graph for describing a reference signal;

FIG. 5C is a diagram for describing a superposed signal;

FIG. 6 is a block diagram illustrating a circuit according to one or more embodiments;

FIG. 7A is a graph for describing a method of band-pass-filtering a reference signal from a superposed signal;

FIG. 7B is a graph for describing a demodulated reference signal;

FIG. 7C is a graph for describing a method of low-pass-filtering a reference signal;

FIG. 8 is a block diagram illustrating a clock generator for implementing a k-space sampling method;
FIG. 9 illustrates signals for describing the clock generator of FIG. 8;
FIGS.10A and 10B are diagrams for describing the effects of the disclosure;
FIG. 11 is a diagram for describing a driving method of a LiDAR system according to one or more embodiments;
FIG. 12A is a diagram for describing an operation of a micro-electromechanical system (MEMS) switch;
FIG. 12B is a diagram for describing an operation of a micro ring resonator;
FIG. 13 is a flowchart for describing an operating method of a LiDAR system, according to one or more embodiments;
FIG. 14 is a perspective view illustrating an electronic device to which a LiDAR system according to one or more embodiments is applied; and
FIGS. 15 and 16 are conceptual diagrams, respectively a side view and a plan view, showing a case where a LiDAR system according to one or more embodiments is applied to a vehicle.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

As for the terms as used in the present embodiments, common terms that are currently widely used are selected as much as possible while taking into account the functions in the present embodiments. However, the terms may vary depending on the intention of those of ordinary skill in the art, precedents, the emergence of new technology, and the like. Also, in a specific case, there are also terms arbitrarily selected by the applicant. In this case, the meaning of the terms will be described in detail in the description of embodiments of the disclosure. Therefore, the terms as used in the present embodiments should be defined based on the meaning of the terms and the description throughout the present embodiments rather than simply the names of the terms.

In the description of embodiments, it will be understood that when a portion is referred to as being "connected to" another portion, it may be "directly connected to" the other portion or "electrically connected to" the other portion with intervening portions therebetween. It will be understood that the terms "comprise," "include," or "have" as used herein specify the presence of stated elements, but do not preclude the presence or addition of one or more other elements.

The terms such as "configured with" or "include" used in the present embodiments should not be construed as necessarily including all of the various components or operations described in the specification. The terms should be construed that some of the components or operations may not be included, or additional components or operations may be included.

The description of the following embodiments should not be construed as limiting the scope of the disclosure, and what may be easily inferred by those of ordinary skill in the art should be construed as falling within the scope of the embodiments. Hereinafter, embodiments are only for illustrative purposes and will be described in detail with reference to the accompanying drawings.

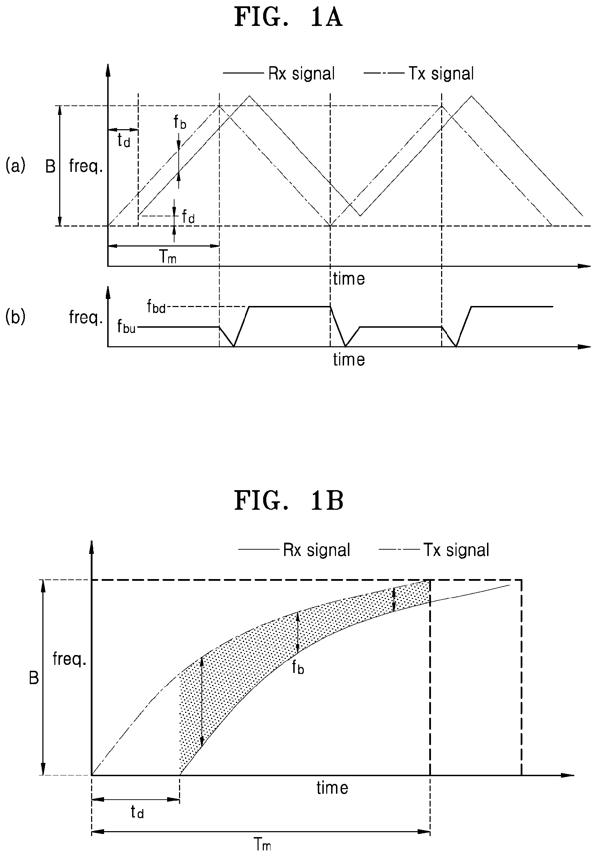

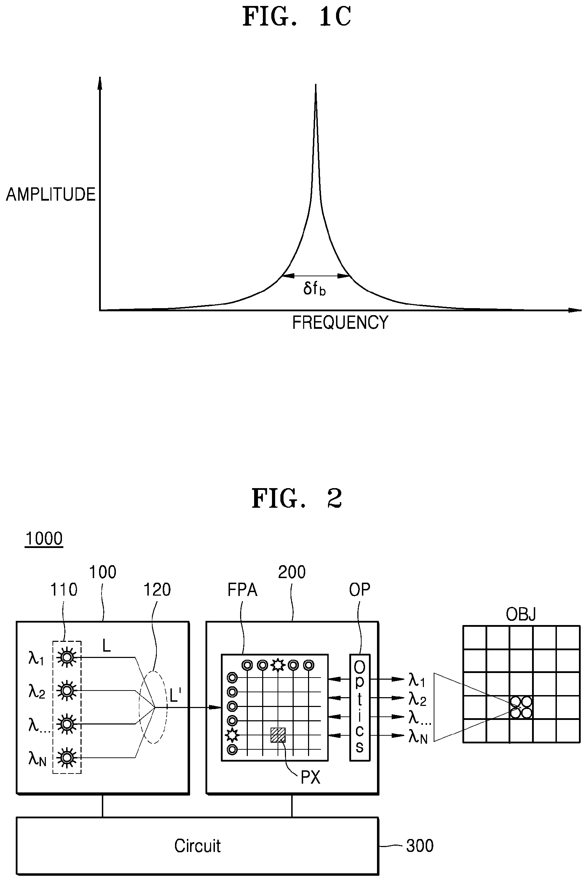

FIG. 1A illustrates a transmit signal transmitted from an FMCW LiDAR system and having a linearly increasing frequency, a receive signal incident after the transmit signal is reflected from a target, and a beat frequency. FIG. 1B illustrates a transmit signal and a receive signal when the frequency of the transmit signal increases nonlinearly. FIG. 1C is a graph showing the spectral peak sharpness of the beat frequency of FIG. 1B.

Graph (a) of FIG. 1A illustrates a transmit signal transmitted from an FMCW LiDAR and a receive signal incident after the transmit signal is reflected from a target. The transmit signal indicated by a dashed line and the receive signal indicated by a solid line have a time difference corresponding to a delay time td and a frequency difference corresponding to a Doppler frequency fd. B represents a modulation bandwidth and Tm represents a modulation period.

Graph (b) of FIG. 1A illustrates a beat frequency represented by a frequency difference between the transmit signal and the receive signal. fbu represents an up-beat frequency corresponding to an up chirp and fbd represents a down-beat frequency corresponding to a down chirp.

At this time, referring to the first modulation period Tm of FIG. 1A, it may be confirmed that the frequency of the transmit signal increases linearly, and accordingly, the frequency of the receive signal also increases linearly. Due to this, the beat frequency may have a constant value (e.g., fbu) in the first modulation period Tm.

The up-beat frequency and the down-beat frequency include frequency shift components due to a distance to a moving object and a relative velocity. The up-beat frequency and the down-beat frequency are referred to as the beat frequency fb and the Doppler frequency fd, respectively.

The up-beat frequency fbu and the down-beat frequency fbd may be respectively represented by Equations 1 and 2 below.

[Equation 1]

fbu=fb-fd

[Equation 2]

fbd=fb+fd

The Doppler frequency with a positive value indicate that the moving object is approaching the LiDAR, and the Doppler frequency with a negative value means that the moving object is moving away from the LiDAR. Therefore, the distance between the moving object and the LiDAR may be obtained as the average of the up-beat frequency fbu and the down-beat frequency fbd, and the moving velocity of the moving object may be calculated (obtained) by using the Doppler frequency fd. The up-beat frequency fbu and the down-beat frequency fbd may be obtained by performing a fast Fourier transform (FFT) on the received beat signal.

For implementing x-y plane scanning in a solid state LiDAR system, flash, mirror-scanning, optical phased array, dispersive, and focal plane array (FPA) methods may be used, and the x-y plane scanning is implemented by combining these scanning methods on the x-y axis. Among them, the FPA has relatively low control complexity and relatively high side mode suppression ratio (SMSR) characteristics, making it suitable for an FMCW driving method.

Referring to FIG. 1Bthe frequency of the transmit signal may increase nonlinearly, and accordingly, the frequency of the transmit signal may also increase nonlinearly. In this case, a frequency of an interference signal between the transmit signal and the receive signal (or a beat frequency fb) may not be constant and may fluctuate in response to the frequency difference between the two signals. Due to this, as illustrated in FIG. 1C, the difference in the beat frequency δfb becomes greater, and thus, the spectral peak sharpness of the beat frequency fb may be reduced. For example, as the nonlinearity of the transmit signal increases, the spectral peak sharpness of the beat frequency fb decreases, which may deteriorate a signal-to-noise ratio (SNR) of an FMCW LiDAR system. Hereinafter, a configuration for improving an SNR of a high-resolution FMCW LiDAR system without increasing the complexity of the system is described in detail with reference to FIGS. 2 to 10B.

FIG. 2 is a conceptual diagram illustrating a LiDAR system 1000 according to one or more embodiments.

Referring to FIG. 2, the LiDAR system 1000 may include a signal generator 100, a transceiver 200, and a circuit 300. The signal generator 100, the transceiver 200, and the circuit 300 may be configured on a single chip or a semiconductor optical device.

According to one or more embodiments, the signal generator 100 may include a light source 110 and an optical coupler 120.

The light source 110 may generate a plurality of pieces of light L having different wavelengths. The plurality of pieces of light L may be considered as a multi-wavelength (multi-λ) electromagnetic wave. For example, the plurality of pieces of light L may be a plurality of lasers having different wavelengths and may also be light other than the lasers. The light source 110 may simultaneously generate the plurality of pieces of light L.

The optical coupler 120 may simultaneously receive the plurality of pieces of light L generated by the light source 110 and output multiplexed light L'.

The light source 110 may further include a light modulator that modulates a plurality of pieces of light.

For FMCW driving, the light modulator (or the signal generator 100) may perform frequency modulation (or chirping) with respect to multiple wavelengths (e.g., λ1, λ2, ..., λN), as illustrated in FIG. 1A. At this time, the bandwidth of the frequency modulation (or chirping) determines a depth resolution. For example, for a depth resolution of 10 cm, the frequency modulation (or chirping) with a bandwidth of about 1.5 GHz is required. To limit crosstalk, the interval between the multiple wavelengths λ1, λ2, ..., λN may be wider than the bandwidth of the frequency modulation for FMCW driving.

The light modulator may modulate light in various methods. For example, the light modulator may modulate the phase of light. As another example, the light modulator may modulate the amplitude of light. As yet another example, the light modulator may simultaneously modulate both the phase and the amplitude of light. In addition, the light modulation function of the light modulator may be variously changed. The light modulator may perform light modulation in various methods, such as an electrical method, a magnetic method, a thermal method, or a mechanical method. For example, the light modulator may include at least one phase shifter (or phase shifting element). The phase shifter may include, for example, at least one or more elements selected from a gain element, an all-pass filter, a Bragg grating, a dispersive material element, a wavelength tuning element, and a phase tuning element. In addition, an actuation mechanism applied to the light modulator may include, for example, at least one selected from thermo-optic actuation, electro-optic actuation, electroabsorption actuation, free carrier absorption actuation, magneto-optic actuation, liquid crystal actuation, and all-optical actuation. The actuation mechanism may be related to the phase tuning. However, the configuration and actuation mechanism of the phase shifter specifically described herein are only an example and embodiments are not limited thereto.

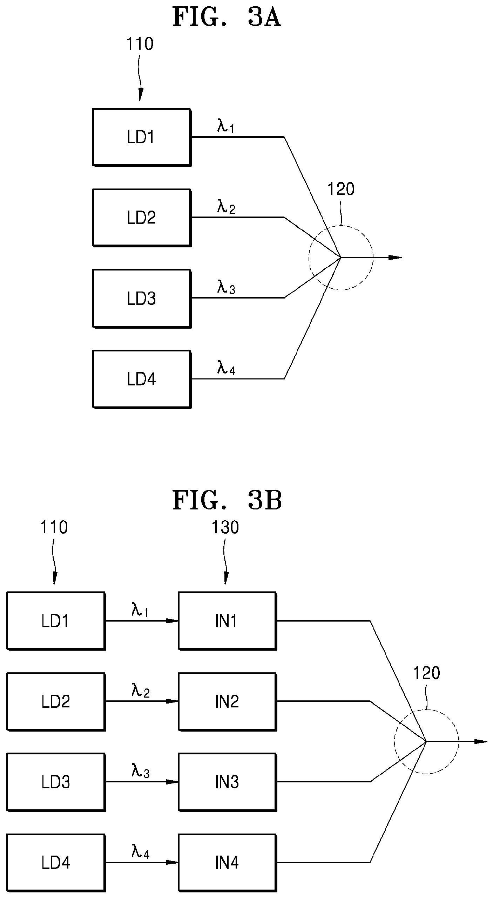

An example configuration of the light source 110 is described in detail below with reference to FIGS. 3A to 3D.

According to one or more embodiments, the transceiver 200 may include a focal plane array (FPA) in which a plurality of pixels PX (or pixel groups) are arranged in a matrix form and an optical element OP that controls a light output angle.

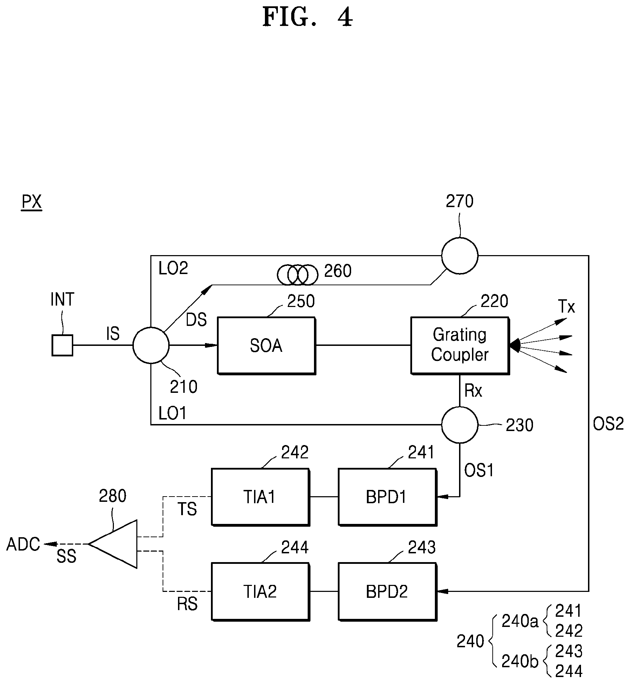

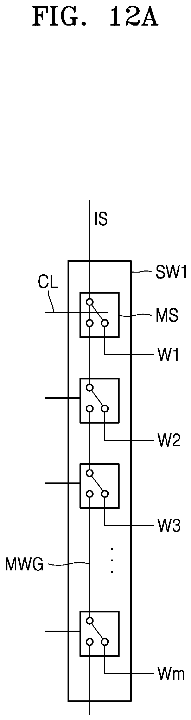

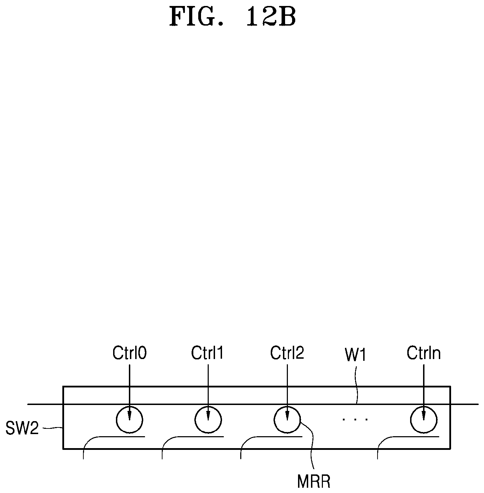

The transceiver 200 may be functionally divided into a transmitter and a receiver. The transmitter may correspond to a light antenna 220 and a light amplifier 250 of FIG. 4, which are described below, and a first light switch SW1 and a second light switch SW2 of FIGS. 12A and 12B, which are described below. The receiver may correspond to a second optical coupler 230, a first balanced photodiode 241, a first transimpedance amplifier 242, a reference arm 260, a third optical coupler 270, a second balanced photodiode 243, a second transimpedance amplifier 244, and a superposer 280 of FIG. 4, which are described below.

In the transmitter, at least one of the x-y axes may be an FPA method. In addition, the transmitter may simultaneously or sequentially output multiplexed light L', as the transmit signal, from one pixel PX included in the FPA.

According to one or more embodiments, the optical element OP may be controlled to have different light output angles according to a wavelength when emitting a plurality of pieces of multiplexed light L' from the pixel PX into free space. For example, the optical element OP may include a prism, a microprism array, a diffraction grating, etc.

The receiver may perform conversion into an electrical signal (or a target signal TS) by mixing a first local oscillator signal LO1 with a receive signal Rx incident after a transmit signal Tx is reflected from a target OBJ. For example, the receiver may be implemented by using the second optical coupler 230 of FIG. 4, which is described below, to perform 50:50 coupling and then incident light on the first balanced photodiode 241. However, the coupling method is not limited thereto and may be implemented by using, for example, a beam splitter. Light of each wavelength includes distance and/or velocity information about the target OBJ.

In addition, the receiver may perform conversion into an electrical signal (or a reference signal RS) by mixing a second local oscillator signal LO2 with a light delay signal DS generated through the reference arm 260. For example, the receiver may be implemented by using the third optical coupler 270 of FIG. 4, which is described below, to perform 50:50 coupling and then incident light on the second balanced photodiode 243.

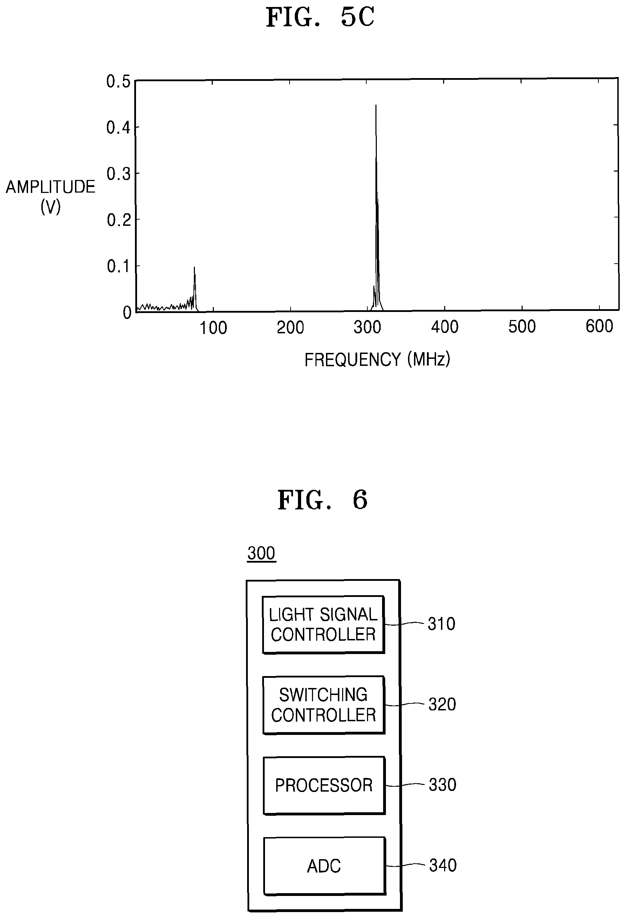

The circuit 300 may be connected to the signal generator 100 and the transceiver 200 and may control the operations of the signal generator 100 and the transceiver 200. In addition, the circuit 300 may analyze a frequency of an electrical signal obtained from the transceiver 200 (or, the receiver) and convert the analyzed frequency into distance and/or velocity information about the target OBJ. An example configuration of the circuit 300 is described in detail below with reference to FIG. 6.

Hereinafter, the configuration of the light source 110 is described in more detail with reference to FIGS. 3A to 3D.

FIG. 3A is a block diagram illustrating a light source applicable to a signal generator, according to one or more embodiments.

Referring to FIG. 3A, according to the present embodiment, the light source 110 may include a plurality of laser sources LD1, LD2, LD3, and LD4. Although four laser sources LD1 to LD4 are illustrated, the number of laser sources may vary. The plurality of laser sources LD1 to LD4 may be, for example, laser diodes. The plurality of laser sources LD1 to LD4 may generate lasers of different wavelengths (e.g., $\lambda 1$, $\lambda 2$, $\lambda 3$, and $\lambda 4$). The lasers of different wavelengths $\lambda 1$, $\lambda 2$, $\lambda 3$, and $\lambda 4$, which are generated by the plurality of laser sources LD1 to LD4, may be input to an optical coupler 120 and multiplexed.

FIG. 3B is a block diagram illustrating a light source applicable to a signal generator, according to one or more other embodiments.

Referring to FIG. 3B, lasers of different wavelengths (e.g., $\lambda 1$, $\lambda 2$, $\lambda 3$, and $\lambda 4$), which are generated by a plurality of laser sources LD1 to LD4, may be input to different input couplers IN1, IN2, IN3, and IN4, respectively. The plurality of input couplers IN1 to IN4 may be included in a single input interface 130. The plurality of input couplers IN1 to IN4 may have, for example, an optical fiber structure or other configurations. A plurality of pieces of light passing through the plurality of input couplers IN1 to IN4 may be multiplexed by an optical coupler 120.

In FIG. 3B, the plurality of input couplers IN1 to IN4 and the optical coupler 120 may be connected to each other through a certain optical waveguide. In some cases, the plurality of input couplers IN1 to IN4 and the optical coupler 120 may be combined integrally and form a single input interface.

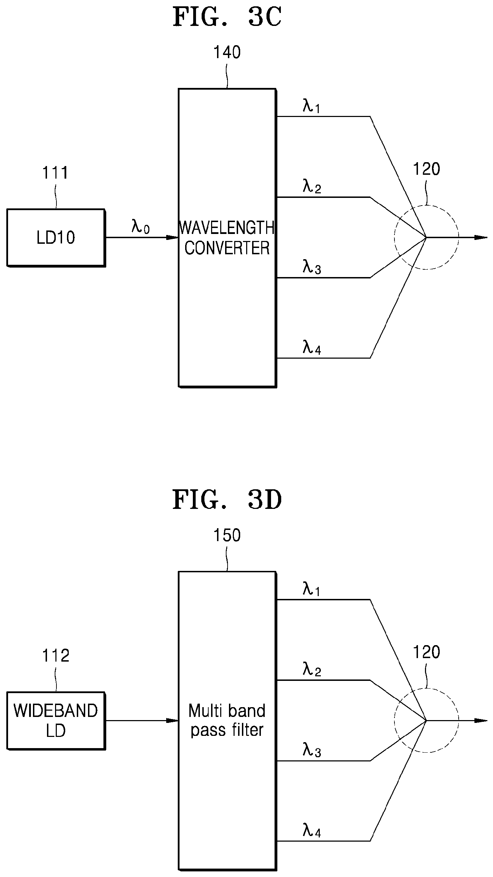

FIG. 3C is a block diagram illustrating a light source applicable to a signal generator, according to one or more other embodiments.

Referring to FIG. 3C, a light source 111 may include a laser source LD10 that generates a laser of a single wavelength $\lambda 0$. For example, the light source 111 may include one laser source LD10. A wavelength converter 140 may be further provided to split laser generated by the laser source LD10 into a plurality of lasers having different wavelengths (e.g., $\lambda 1$, $\lambda 2$, $\lambda 3$, and $\lambda 4$). For example, the wavelength converter 140 may include an input coupler, an optical splitter, and a plurality of wavelength conversion elements. After the laser input to the input coupler is split by the optical splitter, the wavelength of the laser may be converted by the plurality of wavelength conversion elements. As a result, a plurality of pieces of light having different wavelengths (e.g., $\lambda 1$, $\lambda 2$, $\lambda 3$, and $\lambda 4$) may be output through the wavelength converter 140. The plurality of pieces of light may be multiplexed by the optical coupler 120.

In FIG. 3C, the laser source LD10 and the wavelength converter 140 may be combined integrally and form a single light source. The light source may generate the plurality of pieces of light having different wavelengths (e.g., $\lambda1$, $\lambda2$, $\lambda3$, and $\lambda4$). In addition, at least a portion of the wavelength converter 140 or at least a portion of the optical coupler 120 may form a single input coupler. Alternatively, the wavelength converter 140 and the optical coupler 120 may be combined and considered as one input coupler.

FIG. 3D is a block diagram illustrating a light source applicable to a signal generator, according to one or more other embodiments.

Referring to FIG. 3D, a light source 112 may include a wideband laser. For example, the wideband laser may be an element that generates wideband light. A multi-band pass filter 150 may be provided to split light generated by the light source 112. A plurality of pieces of light having multiple wavelengths (e.g., $\lambda1$, $\lambda2$, $\lambda3$, and $\lambda4$) that are distinct from each other may be output through the multi-band pass filter 150. The plurality of pieces of light may be multiplexed by an optical coupler 120.

In FIG. 3D, the wideband laser and the multi-band pass filter 150 may be combined integrally and form a single light source. The light source may generate the plurality of pieces of light having different wavelengths. According to one or more embodiments, the optical coupler 120 may be an input coupler.

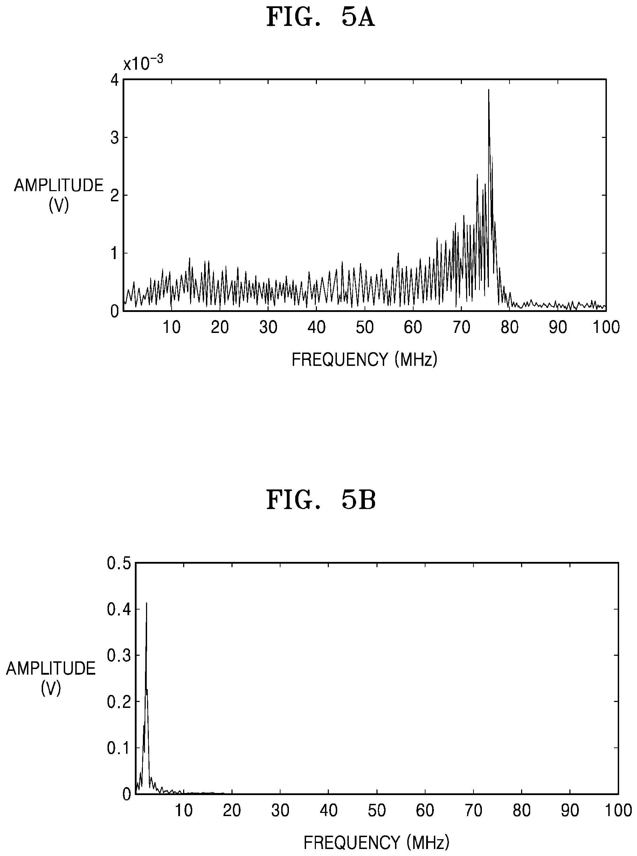

FIG. 4 illustrates a pixel included in an FPA. FIG. 5A is a graph for describing a target signal TS. FIG. 5B is a graph for describing a reference signal RS. FIG. 5C is a diagram for describing a superposed signal SS. At this time, for convenience of explanation, the target signal TS and the reference signal RS, which correspond to the electrical signals before input to the superposer 280, are expressed as frequency domain information through fast Fourier transform.

Referring to FIG. 4, a pixel PX according to one or more embodiments may include a first optical coupler 210 that receives an input signal IS and splits the received input signal IS into a plurality of pieces of light, a target signal generator that generates the target signal TS, a reference signal generator that generates the reference signal RS, and a superposer 280 that superposes the target signal RS and the reference signal RS. At this time, the target signal generator may include a light antenna 220, a second optical coupler 230, and a first photoelectric converter 240a, and the reference signal generator may include a reference arm 260, a third optical coupler 270, and a second photoelectric converter 240b.

The pixel PX may receive a plurality of pieces of multiplexed light (see L' of FIG. 2) as the input signal IS. The first optical coupler 210 may be arranged between the input terminal INT and the light antenna 220.

First, the pixel PX may split the input signal IS into a first local oscillator signal LO1 and a transmit signal Tx, may couple the transmit signal Tx to free space, may couple a receive signal Rx back to the pixel PX, and may mix the first local oscillator signal LO1 with the receive signal Rx.

For example, the first optical coupler 210 may split the input signal IS received through an input terminal INT into the first local oscillator signal LO1 and the transmit signal Tx. The light antenna 220 may receive the receive signal Rx reflected from the target.

The light antenna 220 is a device that emits light from an on-chip waveguide into free space and/or couples light from the free space with the on-chip waveguide. The light antenna 220 may be implemented as, for example, a grating coupler, an edge coupler, an integrated reflector, or any spot size converter. The light antenna 220 may be sensitive to polarization with much higher emission/coupling efficiency with respect to light having one particular polarization (e.g., transverse electric or transverse magnetic). The light antenna 220 may be reciprocal, and thus, may collect a receive signal Rx from a measurement target (e.g., an object within an environment). The light antenna 220 may provide the receive signal Rx to the second optical coupler 230. A co-axial implementation method in which light emission and collection are achieved through the same light antenna 220 is illustrated in FIG. 4, but a bi-axial implementation in which light emission and collection are separately achieved by using respective light antennas is also possible.

The second optical coupler 230 may generate a first output signal OS1 by mixing the receive signal Rx with the first local oscillator signal LO1. The second optical coupler 230 may be a balanced 2x2 light mixer.

The pixel PX may include a photoelectric converter 240 that converts a light signal into an electrical signal. For example, the first photoelectric converter 240a may include a first balanced photodiode 241 that converts the first output signal OS1, which is a light signal, into an electrical signal, and a first transimpedance amplifier 242 that amplifies the intensity of the electrical signal generated by the first balanced photodiode 241. For example, the first transimpedance amplifier 242 may amplify a current generated by the first balanced photodiode 241 and convert the current into a voltage. The target signal TS, which is an electrical signal provided from the first transimpedance amplifier 242, may be provided to the superposer 280.

According to one or more embodiments, the pixel PX may further include a light amplifier 250 arranged between the first optical coupler 210 and the light antenna 220 and configured to compensate for light loss. For example, the light amplifier 250 may be a semiconductor optical amplifier (SOA) and may amplify a light signal so that the intensity of the light generated by the light source (see light source 110 of FIG. 2) may be maintained in the light antenna 220. As another example, the light amplifier 250 may increase an SNR.

In addition, the first optical coupler 210 may split the input signal IS into a second local oscillator signal LO2 and a reference arm input signal DS. The second local oscillator signal LO2 may be substantially the same signal as the first local oscillator signal LO1. Therefore, the second local oscillator signal LO2 may be replaced with the first local oscillator signal LO1. In addition, the reference arm input signal DS may be delayed in the process of passing through a reference arm 260 of a known length.

The third optical coupler 270 may generate a second output signal OS2 by mixing the delayed reference arm input signal DS with the second local oscillator signal LO2. The third optical coupler 270 may be a 2x2 light mixer.

The pixel PX may include the photoelectric converter 240 that converts a light signal into an electrical signal. For example, the second photoelectric converter 240b may include a second balanced photodiode 243 that converts the second output signal OS2, which is a light signal, into an electrical signal, and a second transimpedance amplifier 244 that amplifies the intensity of the electrical signal generated by the second balanced photodiode 243. For example, the second transimpedance amplifier 244 may amplify a current generated by the second balanced photodiode 243 and convert the current into a voltage. The reference signal RS, which is an electrical signal provided from the second transimpedance amplifier 244, may be provided to the superposer 280.

In a case where the light emitted by the light source 110 has four wavelengths (e.g., $\lambda 1$, $\lambda 2$, $\lambda 3$, and $\lambda 4$) as in the high-resolution FMCW LiDAR system 1000 illustrated in FIG. 2, the number of elements corresponding to the pixel PX and the circuit 300 need to increase by the number of wavelengths. In addition, in the related art, when applying a method of forming an additional light path (e.g., the reference arm 260) so as to ensure linearity of a transmit signal, the number of analog-to-digital converters (ADCs) as well as photoelectric converters (e.g., the first photoelectric converters 240a and the second photoelectric converters 240b) required in a pixel PX also needed to be doubled. That is, in the case of the high-resolution FMCW LiDAR system 1000 that simultaneously operates four wavelengths with guaranteed accuracy, a set of eight photoelectric converters (e.g., the first photoelectric converters 240a and the second photoelectric converters 240b) and eight ADCs is required. As such, in order to configure the high-resolution FMCW LiDAR system 1000, an increase in the number of channels is required, which in turn leads to an increase in components and costs. In particular, in a case where the high-resolution FMCW LiDAR system 1000 is configured with a single chip (or semiconductor optical device), the area occupied by the ADC within the chip is relatively large. Accordingly, an increase in the number of ADCs may be a major cause of an increase in the size and production cost of the high-resolution FMCW LiDAR system 1000.

To solve this problem, according to one or more embodiments, a method of collecting data on the same channel (or the same ADC) by superposing a compensation signal obtained by applying frequency modulation to a reference signal RS with a target signal TS is provided.

Referring to FIGS. 4 and 5A to 5C, the superposer 280 may generate a superposed signal SS illustrated in FIG. 5C by superposing the target signal TS illustrated in FIG. 5A and the reference signal RS illustrated in FIG. 5B and may provide the superposed signal SS to a single channel provided in the ADC.

The circuit 300 (or a processor 330) may frequency-modulate the reference signal RS by using a carrier frequency and may generate the superposed signal SS by superposing the frequency-modulated reference signal RS and the target signal TS.

For example, the reference signal RS illustrated in FIG. 5B has a center frequency of about 2 MHz. However, as illustrated in FIG. 5C, it may be confirmed that the reference signal RS frequency-modulated by using the carrier frequency of about 300 MHz has a center frequency of about 302 MHz. As such, by frequency-modulating the reference signal RS, a phenomenon in which the frequency band of the target signal TS and the frequency band of the reference signal RS overlap each other may be prevented. Due to this, in the process of superposing the reference signal RS and the target signal TS, loss of the reference signal RS for generating a correction signal (or a reference clock signal) may be prevented.

Hereinafter, a method of correcting the target signal TS based on the reference signal RS is described in detail with reference to FIGS. 6 to 10B.

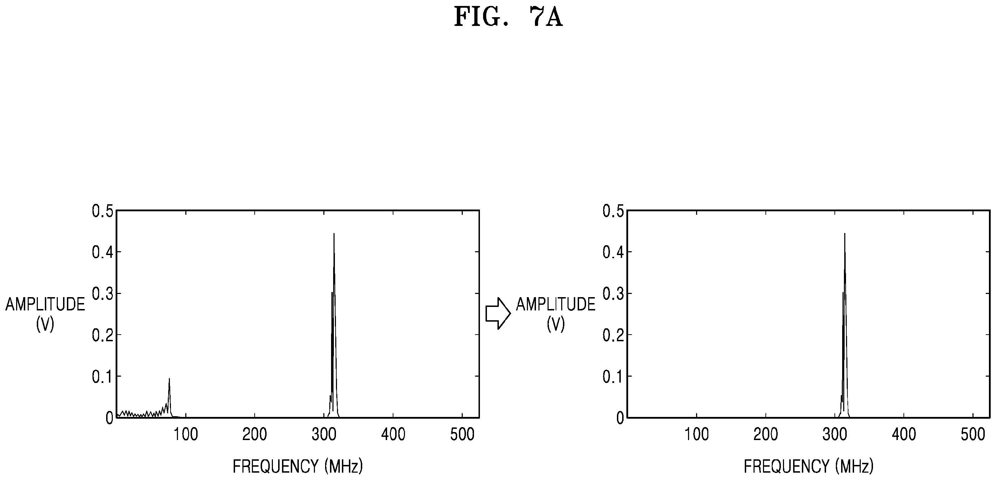

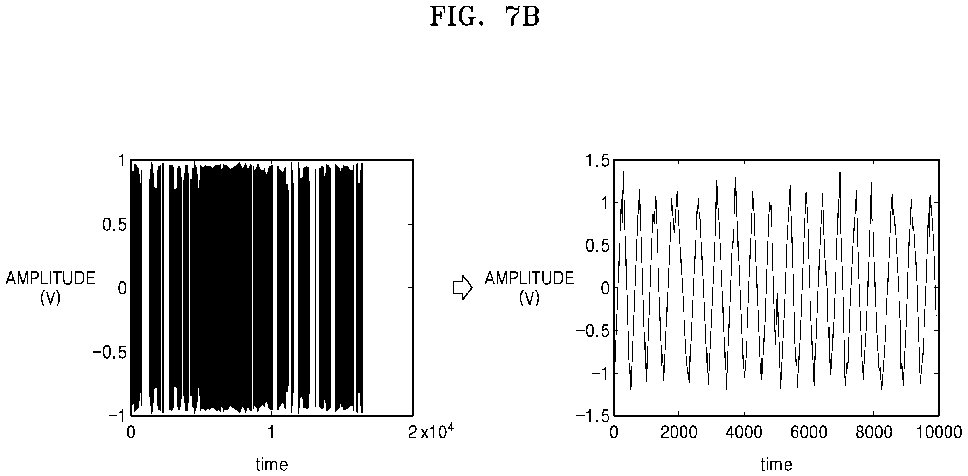

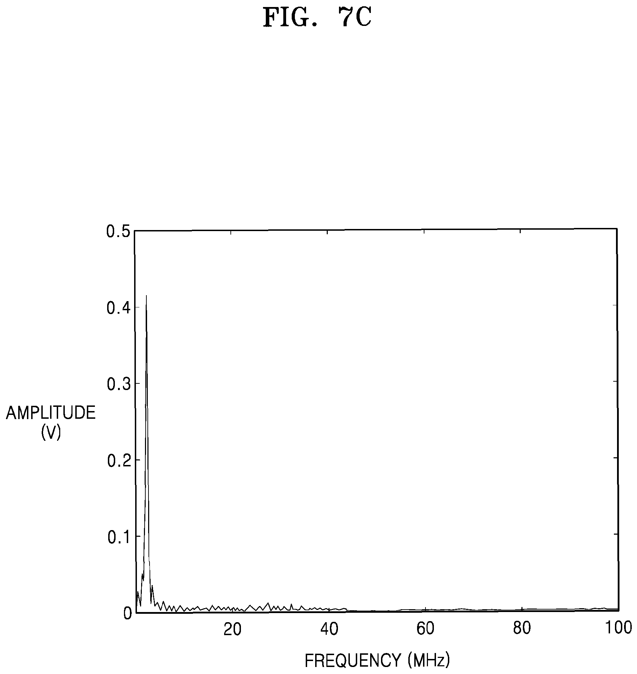

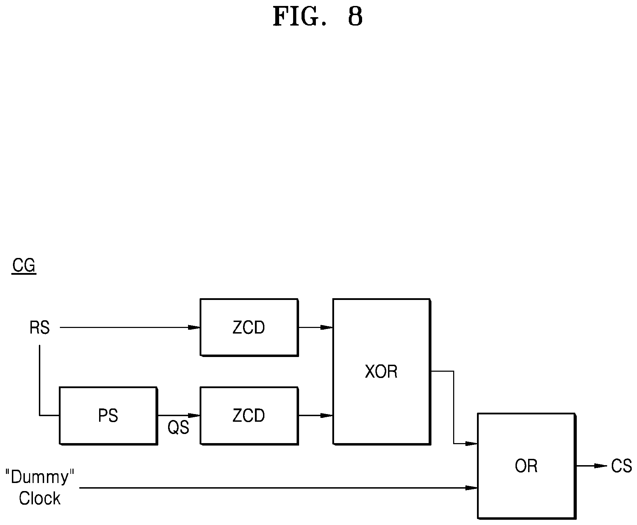

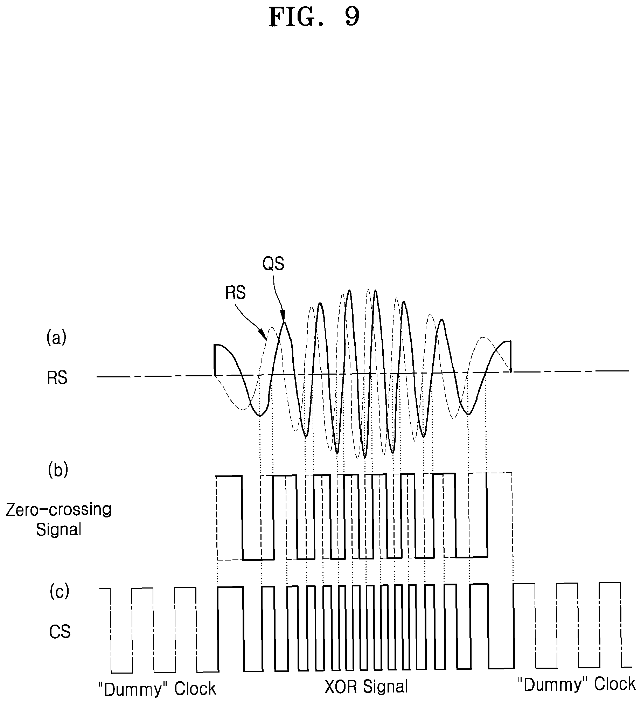

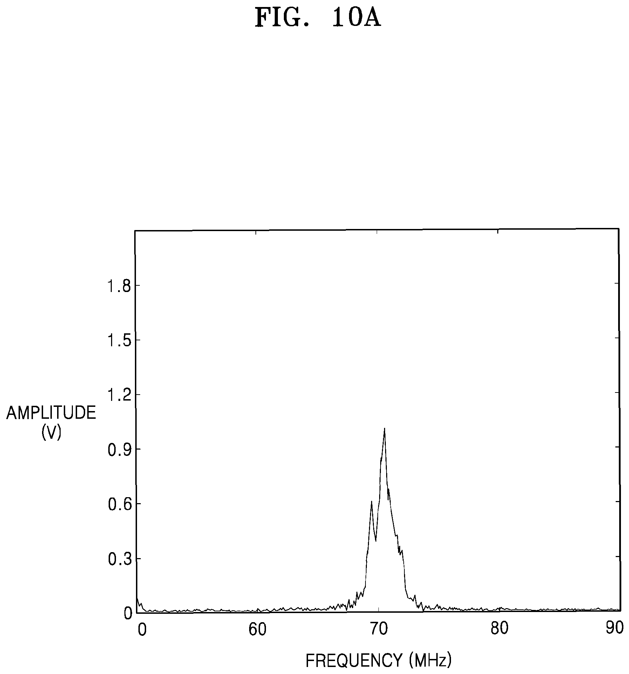

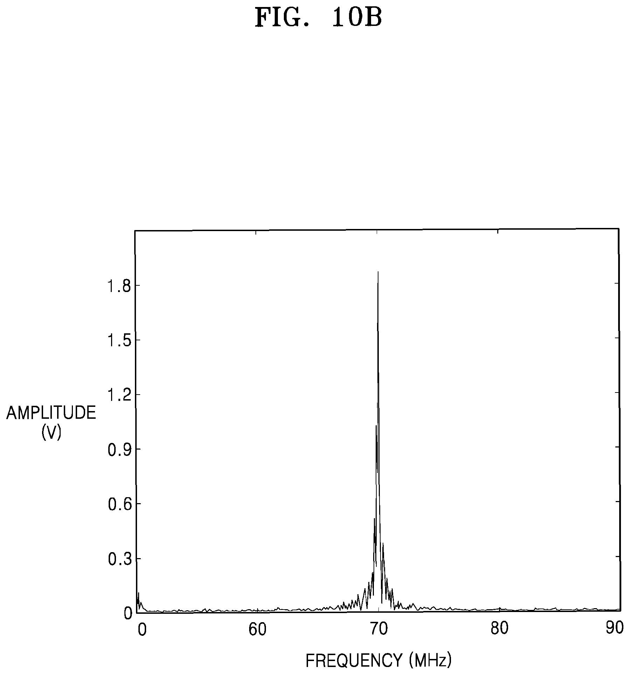

FIG. 6 is a block diagram illustrating the circuit according to one or more embodiments. FIG. 7A is a graph for describing a method of band-pass-filtering the reference signal RS from the superposed signal SS. FIG. 7B is a graph for describing the demodulated reference signal RS. FIG. 7C is a graph for describing a method of low-pass-filtering the reference signal RS. FIG. 8 is a block diagram illustrating a clock generator for implementing a k-space sampling method. FIG. 9 illustrates signals for describing the clock generator of FIG. 8. FIGS. 10A and 10B are diagrams for describing the effects of the one or more embodiments.

Referring to FIGS. 4 and 6, the circuit 300 may include a light signal controller 310, a switching controller 320, a processor 330, and an analog-to-digital converters (ADC) 340.

The light signal controller 310 may control the frequency modulation (or chirping) of the signal generator 100 described above and may include a feedback circuit such as a phase-locked loop (PLL).

The switching controller 320 may control the switching of the FPA of at least one axis of the transmitter of the transceiver 200. The switching control may be an operation of an optical micro-electromechanical system (MEMS). In addition, the switching control may be heating (or thermal) control for thermo-optical elements that manipulate a phase of a micro ring resonator, a mach-zender interferometer (MZI), etc. In addition, the switching control may be a control for electro-optical modulation according to carrier concentration adjustment.

The processor 330 may analyze a frequency of an electrical signal obtained from the transceiver 200 and convert the analyzed frequency into distance and/or velocity information about the target. For example, an analog electrical signal may be binarized through the ADC 340 and then converted into frequency domain information through a fast Fourier transform in a digital processor. Frequency domain information in each pixel may be converted into a point cloud representing a depth or a velocity map and may be used in higher-level applications, such as autonomous driving, through an analysis algorithm including image processing.

In addition, the processor 330 may extract the frequency-modulated reference signal RS by band-pass-filtering the superposed signal SS and may extract the reference signal RS for producing the correction signal (or the reference clock signal) by demodulating and low-pass-filtering the frequency-modulated reference signal RS.

For example, referring to FIG. 7A, the superposed signal SS may include both the target signal TS component and the reference signal RS component. The target signal TS may appear in a frequency band of 100 MHz or less and the center frequency of the reference signal RS may appear at approximately 302 MHz through frequency modulation, as described above. The processor 330 may selectively extract the reference signal RS necessary to produce the correction signal (or the reference clock signal) by using a band-pass filter.

Next, the processor 330 may return the reference signal RS to the original frequency (e.g., 2 MHz) by re-demodulating the reference signal RS that has been frequency-modulated (e.g., 302 MHz) so as to reduce the amount of computation. FIG. 7B illustrates the reference signal RS in the time domain. When comparing the same section (or period), it may be confirmed that the frequency-modulated reference signal RS on the left side includes more waveforms than the demodulated reference signal RS on the right side.

Next, the processor 330 may perform noise filtering to reduce noise in the demodulated reference signal RS. In the one or more embodiment described above, because the center frequency of the demodulated reference signal RS is approximately 2 MHz, noise components other than the reference signal RS may be additionally cancelled by performing low-pass filtering thereon, as illustrated in FIG. 7C.

Next, referring to FIGS. 6, 8, and 9, the processor 330 may produce (generate) the reference clock signal (or the correction signal) by performing k-space sampling on the reference signal RS of FIG. 7C.

The processor 330 according to one or more embodiments may include a clock generator CG that generates the reference clock signal (or the correction signal), based on the reference signal RS of FIG. 7C. The clock generator CG may include a 90° phase shifter PS, a plurality of zero crossing detectors ZCD, an exclusive OR gate XOR, and a logic OR gate OR.

The clock generator CG may generate a quadrant signal QS from the original reference signal RS by using the 90° phase shifter PS (see (a) of FIG. 9). The reference signal RS and the quadrant signal QS may be respectively provided by two zero crossing detectors ZCD.

The two zero crossing detectors ZCD may respectively output two square waves with level high corresponding to the positive portions of the reference signal RS and the quadrant signal QS (see (b) of FIG. 9). The two square waves may be provided to the exclusive OR gate XOR.

Next, the two square waves may be combined through the exclusive OR gate XOR, and the exclusive OR gate XOR may generate a clock pulse that has a level high state only when one of the two square waves is level high (see a solid line in (c) of FIG. 9). In order to fill an empty gap of the clock pulse, a dummy clock signal (see an alternated long and short dash line in (c) of FIG. 9) may be generated within a duration time that complements a time gate for zero crossing detection, and then, may be combined with the clock pulse generated from the zero crossing detector ZCD by the logic OR gate OR to generate a final reference clock signal CS (or a correction signal).

The processor 330 may produce (generate) the corrected target signal TS by using the reference clock signal CS (or the correction signal) to remove distortion of the target signal TS. For example, when the reference clock signal CS (or the correction signal) having non-uniform intervals rather than equal intervals is produced due to the nonlinearity of the signal and sampling is performed thereon based on the reference clock signal CS, uniform sampling of the target signal TS may be possible.

The processor 330 may calculate (obtain) the distance and/or velocity of the target, based on the corrected target signal TS. Referring to FIGS. 10A and 10B, it may be confirmed that the intensity and sharpness of the corrected target signal TS are improved, compared to the intensity and sharpness of the target signal TS before correction. Accordingly, the high-resolution FMCW LiDAR system 1000 according to one or more embodiments may improve the accuracy of the target signal TS without increasing the complexity of the system.

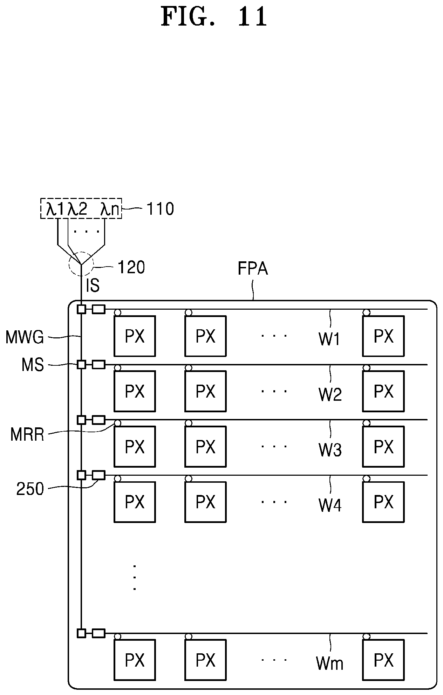

FIG. 11 is a diagram for describing a driving method of a LiDAR system according to one or more embodiments. FIG. 12A is a diagram for describing an operation of a MEMS switch. FIG. 12B is a diagram for describing an operation of a micro ring resonator.

Referring to FIGS. 2, 4, and 11, a LiDAR system 1000 according to one or more embodiments may simultaneously output a plurality of pieces of multiplexed light L' as a transmit signal Tx from one pixel PX included in an FPA and may receive a receive signal Rx reflected and returned from a target.

For example, a plurality of pieces of light L having different wavelengths, which are generated by a light source 110, may be converted into multiplexed light L' through an optical coupler 120. The multiplexed light L' may be provided to the FPA through a main bus waveguide MWG.

When in an on state, the first light switch SW1 may selectively transmit light of the main bus waveguide MWG to row waveguides W1 to Wm. The first light switch SW1 may be implemented in other methods as well as an optical MEMS switch. The first light switch SW1 may be a wideband switch capable of simultaneously turning on/off a wide frequency range over $\lambda 1$ to $\lambda n$. Therefore, a MZI switch may also be utilized.

Referring to FIG. 12A, the first light switch SW1 may be implemented as an array of a plurality of MEMS switches MS. The MEMS switches MS may steer an optical input signal IS from the main bus waveguide MWG according to control signals provided through corresponding control lines CL, and thus, may selectively provide the optical input signal IS to the plurality of row waveguides W1 to Wm, respectively.

Referring again to FIGS. 2, 4, and 11, when in an on state, the second light switch SW2 may selectively transmit pieces of light of the row waveguides W1 to Wm selected by the first light switch SW1 to the pixels PX, respectively. The second light switch SW2 is illustrated as a micro ring resonator, but embodiments are not limited thereto, and the second light switch SW2 may be any switch capable of sequentially or simultaneously turning on/off the multiple wavelengths $\lambda 1$ to $\lambda n$ according to a driving method. When the second light switch SW2 is in an on state, light may be emitted into free space through the light antenna 220.

Referring to FIG. 12B, the second light switch SW2 may be implemented as an array of micro ring resonators MRR. The micro ring resonators MRR may pick up a light signal from row waveguides (e.g., W1 to Wm) when a resonant frequency of a device is aligned with a laser wavelength. According to one or more embodiments, electrical control signals (e.g., Ctrl0, Ctrl1, ..., Ctrln) may be used to set the resonance of the micro ring resonators MRR included in the array and select the pixel PX to receive the light signal.

Referring again to FIGS. 2, 4, and 11, the transceiver 200 (or the FPA) may further include a light amplifier 250 so as to compensate for optical attenuation and loss. The light amplifier 250 may be arranged between the first light switch SW1 and the second light switch SW2 on the row waveguides W1 to Wm. In addition, the light amplifier 250 may be arranged between the second light switch SW2 and the light antenna 220 within the pixel PX. For example, the light amplifier 250 may be an SOA and may amplify a light signal so that the intensity of the light generated by the light source 110 may be maintained in the light antenna 220. As another example, the light amplifier 250 may increase an SNR.

As the circuit (see circuit 300 of FIG. 2) (or the processor 330 of FIG. 6) must be able to separate and process information about each wavelength when pieces of light of various wavelengths are simultaneously output and incident from one pixel PX, the pixel PX may include a demultiplexer for wavelengths in the waveguide between the light antenna 220 of FIG. 4 and the front end of the second optical coupler 230. For example, the demultiplexer may be implemented as an optical band-pass filter, a micro ring resonator, etc. However, the arrangement position of the demultiplexer is not limited thereto. For example, the demultiplexer may be arranged in the waveguide between the first optical coupler 210 and the second optical coupler 230.

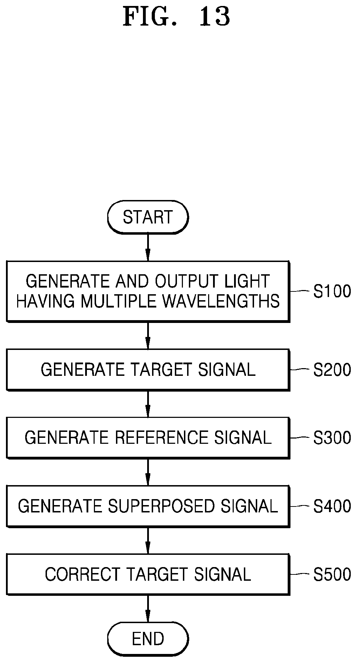

FIG. 13 is a flowchart for describing an operating method of a LiDAR system, according to one or more embodiments.

Referring to FIGS. 1A to 13, the operating method of the LiDAR system 1000 according to one or more embodiments may include generating and outputting a plurality of pieces of multiplexed light through the signal generator 100 (S100), generating the target signal TS (S200), generating the reference signal RS (S300), generating the superposed signal SS (S400), and correcting the target signal TS (S500).

For example, in operation S100, the signal generator 100 may include the light source 110 and the optical coupler 120. The light source 110 may generate a plurality of pieces of light L having different wavelengths. The plurality of pieces of light L may be considered as a multi-wavelength (multi-$\lambda$) electromagnetic wave. For example, the plurality of pieces of light L may be a plurality of lasers having different wavelengths and may also be light other than the lasers. The light source 110 may simultaneously generate the plurality of pieces of light L. The optical coupler 120 may simultaneously receive the plurality of pieces of light L generated by the light source 110 and output multiplexed light L'.

The transceiver 200 may include the FPA in which a plurality of pixels PX (or pixel groups) are arranged in a matrix form and the optical element OP that controls a light output angle.

The transceiver 200 may be functionally divided into a transmitter and a receiver. In the transmitter, at least one of the x-y axes may be an FPA method. In addition, the transmitter may simultaneously output multiplexed light L', as the transmit signal, from one pixel PX included in the FPA.

According to one or more embodiments, the optical element OP may be controlled to have different light output angles according to a wavelength when emitting a plurality of pieces of multiplexed light L' from the pixel PX into free space.

In operation S200, the receiver may perform conversion into the electrical signal (or the target signal TS) by mixing the first local oscillator signal LO1 with the receive signal Rx incident after the transmit signal Tx is reflected from the target OBJ.

In operation S300, the receiver may perform conversion into the electrical signal (or the reference signal RS) by mixing the second local oscillator signal LO2 with the light delay signal DS generated through the reference arm 260.

In operation S400, the superposer 280 may generate the superposed signal SS illustrated in FIG. 5C by superposing the target signal TS illustrated in FIG. 5A and the reference signal RS illustrated in FIG. 5B and may provide the superposed signal SS to a single channel provided in the ADC.

The circuit 300 (or a processor 330) may frequency-modulate the reference signal RS by using a carrier frequency and may generate the superposed signal SS by superposing the frequency-modulated reference signal RS and the target signal TS.

For example, the reference signal RS illustrated in FIG. 5B has a center frequency of about 2 MHz. However, as illustrated in FIG. 5C, it may be confirmed that the reference signal RS frequency-modulated by using the carrier frequency of about 300 MHz has a center frequency of about 302 MHz. As such, by frequency-modulating the reference signal RS, a phenomenon in which the frequency band of the target signal TS and the frequency band of the reference signal RS overlap each other may be prevented. Due to this, in the process of superposing the reference signal RS and the target signal TS, loss of the reference signal RS for generating the correction signal (or the reference clock signal) may be prevented.

In operation S500, the processor 330 may extract the frequency-modulated reference signal RS by band-pass-filtering the superposed signal SS and may extract the reference signal RS for producing the correction signal (or the reference clock signal) by demodulating and low-pass-filtering the frequency-modulated reference signal RS.

For example, referring to FIG. 7A, the superposed signal SS may include both the target signal TS component and the reference signal RS component. The target signal TS may appear in a frequency band of 100 MHz or less and the center frequency of the reference signal RS may appear at approximately 302 MHz through frequency modulation, as described above. The processor 330 may selectively extract the reference signal RS necessary to produce the correction signal (or the reference clock signal) by using a band-pass filter.

Next, the processor 330 may return the reference signal RS to the original frequency (e.g., 2 MHz) by re-demodulating the reference signal RS that has been frequency-modulated (e.g., 302 MHz) so as to reduce the amount of computation. FIG. 7B illustrates the reference signal RS in the time domain. When comparing the same section (or period), it may be confirmed that the frequency-modulated reference signal RS on the left side includes waveforms with higher frequency than the demodulated reference signal RS on the right side.

Next, the processor 330 may perform noise filtering to reduce noise in the demodulated reference signal RS. In the one or more embodiments described above, because the center frequency of the demodulated reference signal RS is approximately 2 MHz, noise components other than the reference signal RS may be additionally cancelled by performing low-pass filtering thereon, as illustrated in FIG. 7C.

Next, referring to FIGS. 6, 8, and 9, the processor 330 may produce (generate) the reference clock signal (or the correction signal) by using (e.g., performing k-space sampling) on the reference signal RS of FIG. 7C.

Next, the processor 330 may produce (generate) the corrected target signal TS by using the reference clock signal CS (or the correction signal) to remove distortion of the target signal TS. For example, when the reference clock signal CS (or the correction signal) having non-uniform intervals rather than equal intervals is produced due to the nonlinearity of the signal and sampling is performed thereon based on the reference clock signal CS, nonlinear frequency increase or decrease of the target signal TS may be linearly corrected.

The processor 330 may calculate (obtain) the distance and/or velocity of the target, based on the corrected target signal TS. Referring to FIGS. 10A and 10B, it may be confirmed that the intensity and sharpness of the corrected target signal TS are improved, compared to the intensity and sharpness of the target signal TS before correction. Accordingly, the high-resolution FMCW Li-DAR system 1000 according to the disclosure may improve distance measurement accuracy by increasing the SNR of the target signal TS without increasing the complexity of the system.

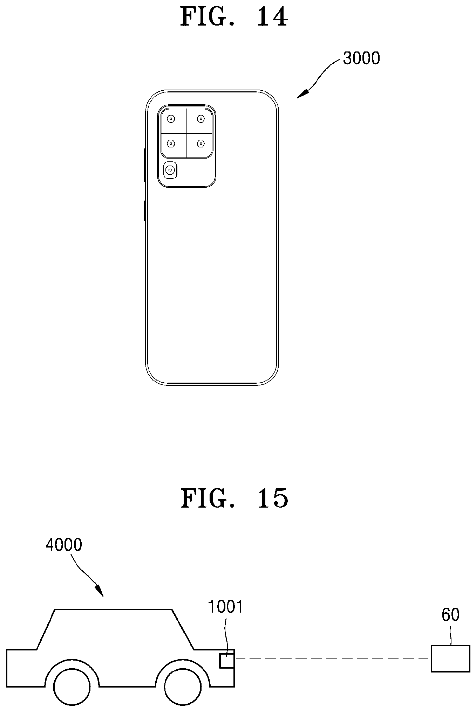

FIG. 14 is a perspective view illustrating an electronic device to which a LiDAR system according to one or more embodiments is applied.

In FIG. 14, the electronic device is illustrated in the form of a mobile phone or a smartphone 3000, the electronic device to which the LiDAR system is applied is not limited thereto. For example, the electronic device may be applied to a tablet or a smart tablet, a laptop computer, a television or a smart television, etc.

In addition, the LiDAR system according to one or more embodiments may be applied to an autonomous driving device.

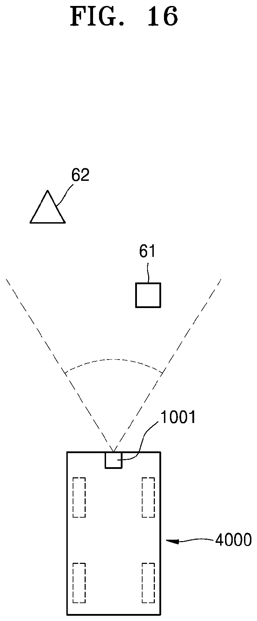

FIGS. 15 and 16 are conceptual diagrams, respectively a side view and a plan view, showing a case where a LiDAR system according to one or more embodiments is applied to a vehicle.

Referring to FIG. 15, a LiDAR system 1001 may be applied to a vehicle 4000 and information about a subject 60 may be obtained by using the LiDAR system 1001. The LiDAR system 1001 may employ the LiDAR system described with reference to FIGS. 2 to 12B. In order to obtain the information about the subject 60, the LiDAR system 1001 may simultaneously measure a distance and a velocity by using an FMCW method.

The vehicle 50 may be an automobile having an autonomous driving function. As described with reference to FIG. 15, the LiDAR system 1001 may divide a target area of a target field of view into a plurality of sub-areas and emit a set of beams, each split into the plurality of sub-areas, at certain time intervals. When the subject is present within the target area and light reflected from the subject is detected while including a frequency component of a specific area, a digital scan on the target area may be started and information about the subject 60 may be analyzed. The LiDAR system 1001 may be used to detect an object or person, i.e., the subject 60 in a direction in which the vehicle 4000 is moving, and may measure the distance to the subject 60 by using information such as a time and frequency component difference between a transmit signal and a receive signal. In addition, as illustrated in FIG. 12, information about a nearby subject 61 and a distant subject 62 within the target area may be obtained.

FIGS. 15 and 16 illustrate the application of the LiDAR system to automobiles, but embodiments are not limited thereto. The LiDAR system may be applied to aircraft such as drones, mobile devices, small vehicle devices (e.g., bicycles, motorcycles, baby strollers, boards, etc.), robots, human/animal assistance devices (e.g., canes, helmets, accessories, clothing, watches, bags, etc.), Internet of things (IoT) devices/systems, security devices/systems, etc.

In the LiDAR system and the operating method thereof according to embodiments, the correction signal based on the reference signal is superposed with the receive signal (or the target signal) and received on the same channel, and thus, the SNR of the high-resolution LiDAR system may be improved without increasing the complexity of the system.

The effects of the embodiments are not limited to those described above, and effects that are not mentioned herein may be clearly understood from the present specification and accompanying drawings by those of ordinary skill in the art.

It should be understood that embodiments described herein should be considered in a descriptive sense only and not for purposes of limitation. Descriptions of features or aspects within each embodiment should typically be considered as available for other similar features or aspects in other embodiments. While embodiments have been described with reference to the figures, it will be understood by those of ordinary skill in the art that various changes in form and details may be made therein without departing from the scope as defined by the following claims.

Further embodiments are described by the following clauses:

1. A light detection and ranging (LiDAR) system comprising:

a signal generator configured to generate a plurality of pieces of light having different wavelengths;
a transceiver comprising:

a transmitter configured to output the plurality of pieces of light as a transmit signal; and
a receiver configured to:

generate a target signal by mixing a first local oscillator signal with a receive signal incident after the transmit signal is reflected from a target; and
generate a reference signal by mixing a second local oscillator signal with a light delay signal generated through a reference arm; and
a circuit operably connected to the signal generator and the transceiver, and configured to control operations of the signal generator and the transceiver, wherein the receiver comprises a superposer configured to generate a superposed signal by superposing the target signal and the reference signal.

2. The LiDAR system of clause 1, wherein the signal generator comprises:

a light source configured to generate the plurality of pieces of light having the different wavelengths;
a multiplexer configured to simultaneously receive and multiplex the plurality of pieces of light; and
a light modulator configured to modulate the plurality of pieces of light.

3. The LiDAR system of clause 1, wherein the circuit comprises processor configured to:

correct the target signal based on the reference signal;
frequency-modulate the reference signal based on a carrier frequency; and
generate the superposed signal by superposing the frequency-modulated reference signal and the target signal.

4. The LiDAR system of clause 3, wherein the processor is further configured to:

extract the frequency-modulated reference signal by band-pass-filtering the superposed signal; and
extract the reference signal by demodulating and low-pass-filtering the frequency-modulated reference signal.

5. The LiDAR system of clause 4, wherein the processor is further configured to generate a reference clock signal based on the extracted reference signal.

6. The LiDAR system of clause 5, wherein the processor is further configured to remove distortion of the target signal to generate the corrected target signal based on the reference clock signal.

7. The LiDAR system of clause 6, wherein the processor is further configured to obtain at least one of a distance of the target and a velocity of the target, based on the corrected target signal.

8. The LiDAR system of clause 1, wherein the transceiver comprises a focal plane array comprising pixel groups in a matrix form, and each of the pixel groups comprises at least two pixels, and

wherein the transmitter is further configured to output the transmit signal in units of the pixel groups.

9. The LiDAR system of clause 8, wherein the focal plane array is configured to receive the transmit signal through a main bus waveguide.

10. The LiDAR system of clause 9, wherein each pixel of the at least two pixels comprises:

a first optical coupler configured to split an input signal into the transmit signal, the reference signal, the first local oscillator signal, and the second local oscillator signal;

a light antenna configured to emit the transmit signal into free space and/or receive the receive signal from the free space;

a second optical coupler configured to generate a first output light signal by mixing the first local oscillator signal with the receive signal;

a third optical coupler configured to generate a second output light signal by mixing the second local oscillator signal with the reference signal;

a first photoelectric converter configured to convert the first output light signal into the target signal; and

a second photoelectric converter configured to convert the second output light signal into the reference signal.

11. The LiDAR system of clause 10, wherein the each pixel of the at least two pixels further comprises the reference arm provided between the first optical coupler and the second optical coupler, and

wherein the reference arm is configured to generate the second output light signal.

12. The LiDAR system of clause 10, wherein the input signal comprises a frequency modulated continuous wave (FMCW) laser signal.

13. The LiDAR system of clause 10, wherein the first photoelectric converter comprises a first balanced photodiode configured to convert the first output light signal into an electrical signal, and a first transimpedance amplifier configured to amplify intensity of the electrical signal, and

wherein the second photoelectric converter comprises a second balanced photodiode configured to convert the second output light signal into an electrical signal, and a second transimpedance amplifier configured to amplify intensity of the electrical signal.

14. The LiDAR system of claim 13, wherein the circuit comprises an analog-to-digital converter configured to binarize the electrical signal, and

wherein the superposed signal is received through a single channel of the analog-to-digital converter.

15. An operating method of a light detection and ranging (LiDAR) system, the operating method comprising:

generating, by a signal generator, a plurality of pieces of light having different wavelengths;

outputting, by a transceiver, the plurality of pieces of light as a transmit signal;

generating a target signal by mixing a first local oscillator signal with a receive signal incident after the transmit signal is reflected from a target;

generating a reference signal by mixing a second local oscillator signal with a light delay signal generated through a reference arm;

receiving, by a processor, through a signal channel, a superposed signal generated by superposing the target signal and the reference signal; and

correcting, by a processor, the target signal based on the reference signal.

16. The operating method of clause 15, wherein the correcting the target signal comprises frequency-modulating the reference signal based on a carrier frequency, and generating the superposed signal by superposing the frequency-modulated reference signal and the target signal.

17. The operating method of clause 16, wherein the correcting the target signal comprises:

extracting the frequency-modulated reference signal by band-pass-filtering the superposed signal; and

extracting the reference signal by demodulating and low-pass-filtering the frequency-modulated reference signal.

18. The operating method of clause 17, wherein the correcting the target signal comprises generating a reference clock signal based on the extracted reference signal.

19. The operating method of clause 18, wherein the correcting the target signal comprises generating the corrected target signal based on the reference clock signal to remove distortion of the target signal.

20. The operating method of clause 19, further comprising obtaining at least one of a distance of the target and a velocity of the target, based on the corrected target signal.

**Claims**

1. A light detection and ranging (LiDAR) system comprising:

   a signal generator configured to generate a plurality of pieces of light having different wavelengths;
   a transceiver comprising:

      a transmitter configured to output the plurality of pieces of light as a transmit signal; and
      a receiver configured to:

         generate a target signal by mixing a first local oscillator signal with a receive signal incident after the transmit signal is reflected from a target; and
         generate a reference signal by mixing a second local oscillator signal with a light delay signal generated through a reference arm; and

   a circuit operably connected to the signal generator and the transceiver, and configured to control operations of the signal generator and the transceiver,
   wherein the receiver comprises a superposer configured to generate a superposed signal by superposing the target signal and the reference signal.

2. The LiDAR system of claim 1, wherein the signal generator comprises:

   a light source configured to generate the plurality of pieces of light having the different wavelengths;
   a multiplexer configured to simultaneously receive and multiplex the plurality of pieces of light; and
   a light modulator configured to modulate the plurality of pieces of light.

3. The LiDAR system according to any one of the previous claims, wherein the circuit comprises a processor configured to:

   correct the target signal based on the reference signal;
   frequency-modulate the reference signal based on a carrier frequency; and
   generate the superposed signal by superposing the frequency-modulated reference signal and the target signal.

4. The LiDAR system of claim 3, wherein the processor is further configured to:

   extract the frequency-modulated reference signal by band-pass-filtering the superposed signal; and
   extract the reference signal by demodulating and low-pass-filtering the frequency-modulated reference signal.

5. The LiDAR system of claim 3 or 4, wherein the processor is further configured to generate a reference clock signal based on the extracted reference signal wherein the processor is preferably further configured to remove distortion of the target signal to generate the corrected target signal based on the reference clock signal;
   wherein the processor is preferably further configured to obtain at least one of a distance of the target and a velocity of the target, based on the corrected target signal.

6. The LiDAR system according to any one of the previous claims, wherein the transceiver comprises a focal plane array comprising pixel groups in a matrix form, and each of the pixel groups comprises at least two pixels,

   wherein the transmitter is further configured to output the transmit signal in units of the pixel groups, and
   wherein the focal plane array is preferably configured to receive the transmit signal through a main bus waveguide.

7. The LiDAR system of claim 6, wherein each pixel of the at least two pixels comprises:

   a first optical coupler configured to split an input signal into the transmit signal, the reference signal, the first local oscillator signal, and the second local oscillator signal;
   a light antenna configured to emit the transmit signal into free space and/or receive the receive signal from the free space;
   a second optical coupler configured to generate a first output light signal by mixing the first local oscillator signal with the receive signal;
   a third optical coupler configured to generate a second output light signal by mixing the second local oscillator signal with the reference signal;
   a first photoelectric converter configured to convert the first output light signal into the target signal; and

a second photoelectric converter configured to convert the second output light signal into the reference signal.

8. The LiDAR system of claim 6 or 7, wherein each pixel of the at least two pixels further comprises the reference arm provided between the first optical coupler and the second optical coupler, and wherein the reference arm is configured to generate the second output light signal.

9. The LiDAR system of claim 7 or 8, wherein the input signal comprises a frequency modulated continuous wave (FMCW) laser signal.

10. The LiDAR system according to any one of claims 7-9, wherein the first photoelectric converter comprises a first balanced photodiode configured to convert the first output light signal into an electrical signal, and a first transimpedance amplifier configured to amplify intensity of the electrical signal, and wherein the second photoelectric converter comprises a second balanced photodiode configured to convert the second output light signal into an electrical signal, and a second transimpedance amplifier configured to amplify intensity of the electrical signal.

11. The LiDAR system of claim 10, wherein the circuit comprises an analog-to-digital converter configured to binarize the electrical signal, and wherein the superposed signal is received through a single channel of the analog-to-digital converter.

12. An operating method of a light detection and ranging (LiDAR) system, the operating method comprising:

generating, by a signal generator, a plurality of pieces of light having different wavelengths; outputting, by a transceiver, the plurality of pieces of light as a transmit signal; generating a target signal by mixing a first local oscillator signal with a receive signal incident after the transmit signal is reflected from a target; generating a reference signal by mixing a second local oscillator signal with a light delay signal generated through a reference arm; receiving, by a processor, through a signal channel, a superposed signal generated by superposing the target signal and the reference signal; and correcting, by a processor, the target signal based on the reference signal.

13. The operating method of claim 12, wherein correcting the target signal comprises frequency-modulating the reference signal based on a carrier frequency, and generating the superposed signal by superposing the frequency-modulated reference signal and the target signal.

14. The operating method of claim 12 or 13, wherein correcting the target signal comprises:

extracting the frequency-modulated reference signal by band-pass-filtering the superposed signal; and extracting the reference signal by demodulating and low-pass-filtering the frequency-modulated reference signal.

15. The operating method according to any one of claims 12-14, wherein correcting the target signal comprises generating a reference clock signal based on the extracted reference signal, wherein correcting the target signal preferably comprises generating the corrected target signal based on the reference clock signal to remove distortion of the target signal; and/or

preferably further comprising obtaining at least one of a distance of the target and a velocity of the target, based on the corrected target signal.

# FIG. 1A

# FIG. 1B

# FIG. 1C

# FIG. 2

# FIG. 3A

110

| LD1 | $\lambda_1$
| LD2 | $\lambda_2$
| LD3 | $\lambda_3$
| LD4 | $\lambda_4$

120

# FIG. 3B

110                130

| LD1 | $\lambda_1$ → | IN1 |
| LD2 | $\lambda_2$ → | IN2 |
| LD3 | $\lambda_3$ → | IN3 |
| LD4 | $\lambda_4$ → | IN4 |

120

# FIG. 3C

140

111

LD10  $\lambda_0$  → WAVELENGTH CONVERTER

$\lambda_1$

$\lambda_2$     120

$\lambda_3$

$\lambda_4$

# FIG. 3D

150

112

WIDEBAND LD → Multi band pass filter

$\lambda_1$

$\lambda_2$     120

$\lambda_3$

$\lambda_4$

# FIG. 4

# FIG. 5A

# FIG. 5B

# FIG. 5C

# FIG. 6

300

FIG. 7A

23

FIG. 7B

EP 4 711 810 A1

# FIG. 7C

# FIG. 8

CG

# FIG. 9

(a)

RS

QS

RS

(b)

Zero-crossing
Signal

(c)

CS

"Dummy" Clock          XOR Signal          "Dummy" Clock

# FIG. 10A

FIG. 10B

# FIG. 11

# FIG. 12A

# FIG. 12B

Ctrl0    Ctrl1    Ctrl2    W1    Ctrln

SW2

MRR

# FIG. 13

```
                    ┌─────────┐
                    │  START  │
                    └────┬────┘
                         ▼
        ┌──────────────────────────────┐
        │   GENERATE AND OUTPUT LIGHT   │──── S100
        │   HAVING MULTIPLE WAVELENGTHS │
        └───────────────┬──────────────┘
                        ▼
        ┌──────────────────────────────┐
        │     GENERATE TARGET SIGNAL    │──── S200
        └───────────────┬──────────────┘
                        ▼
        ┌──────────────────────────────┐
        │   GENERATE REFERENCE SIGNAL   │──── S300
        └───────────────┬──────────────┘
                        ▼
        ┌──────────────────────────────┐
        │   GENERATE SUPERPOSED SIGNAL  │──── S400
        └───────────────┬──────────────┘
                        ▼
        ┌──────────────────────────────┐
        │     CORRECT TARGET SIGNAL     │──── S500
        └───────────────┬──────────────┘
                        ▼
                   ┌─────────┐
                   │   END   │
                   └─────────┘
```

## FIG. 14

3000

## FIG. 15

4000

1001

60

# FIG. 16

Europäisches
Patentamt

European
Patent Office

Office européen
des brevets

## EUROPEAN SEARCH REPORT

**Application Number**

EP 25 20 0203

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 839 554 A1 (ZEISS CARL AG [DE]) 23 June 2021 (2021-06-23) | 1,6-11 | **INV.** G01S7/497 |
| Y | * abstract; claim 1; figures 1, 2A * * paragraphs [0015], [0032], [0033] - [0041] * | 1-15 | G01S7/481 G01S7/4913 G01S7/4915 G01S7/4912 |
| Y | LI CHAOLIN ET AL: "High-Resolution Frequency-Modulated Continuous-Wave LiDAR Using Multiple Laser Sources Simultaneously Scanning", JOURNAL OF LIGHTWAVE TECHNOLOGY, vol. 41, no. 1, 1 January 2023 (2023-01-01), pages 367-373, XP093347789, USA ISSN: 0733-8724, DOI: 10.1109/JLT.2022.3212470 * abstract; figures 4, 5, 6 * * page 367, right-hand column, line 26 - page 370, left-hand column, line 26 * | 1-15 | G01S17/34 G01S17/42 G01S17/58 G01S17/931 |
| A | US 2022/365214 A1 (SANDBORN PHILLIP [US] ET AL) 17 November 2022 (2022-11-17) * abstract; figures 1,3,5A, 5B, 7 * * paragraphs [0028], [0029], [0040], [0052] * | 1-15 | **TECHNICAL FIELDS SEARCHED (IPC)** G01S |

The present search report has been drawn up for all claims

| Place of search | Date of completion of the search | Examiner |
|---|---|---|
| Munich | 17 December 2025 | Rodríguez González |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 0203

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2025

| Patent document cited in search report | | Publication date | Patent family member(s) | | Publication date |
|---|---|---|---|---|---|
| EP 3839554 | A1 | 23-06-2021 | DE | 102019135648 A1 | 24-06-2021 |
| | | | EP | 3839554 A1 | 23-06-2021 |
| US 2022365214 | A1 | 17-11-2022 | CA | 3163597 A1 | 29-07-2021 |
| | | | CN | 115023628 A | 06-09-2022 |
| | | | EP | 4094097 A1 | 30-11-2022 |
| | | | JP | 7603694 B2 | 20-12-2024 |
| | | | JP | 2023511134 A | 16-03-2023 |
| | | | JP | 2025041690 A | 26-03-2025 |
| | | | KR | 20220124191 A | 13-09-2022 |
| | | | KR | 20240161230 A | 12-11-2024 |
| | | | KR | 20250028511 A | 28-02-2025 |
| | | | US | 2022365214 A1 | 17-11-2022 |
| | | | WO | 2021150826 A1 | 29-07-2021 |

EPO FORM P0459

For more details about this annex : see Official Journal of the European Patent Office, No. 12/82